# EUROPEAN PATENT SPECIFICATION

(11) **EP 0 514 314 B1**
(45) Date of publication and mention of the grant of the patent: **10.01.1996**
(21) Application number: 92610028.0
(22) Date of filing: 15.04.1992
(51) Int. Cl.: A01D 34/66

(54) **Tractor suspension for a lift suspended agricultural implement, especially a disc mower or a cylinder mower**
Schlepperaufhängung für ein landwirtschaftliches Werkzeug, insbesondere einen Scheibenmäher oder einen Zylindermäher
Dispositif d'attelage sur tracteur pour un outil agricole, en particulier une faucheuse à disques ou à cylindres

(30) Priority: 25.04.1991 DK 762/91
(43) Date of publication of application: 19.11.1992
(73) Proprietor: JF-FABRIKEN - J. FREUDENDAHL A/S, DK-6400 Sonderborg (DK)
(72) Inventor: Freudendahl, Jorn, DK-6400 Sonderborg (DK); Nielsen, Harald Raun, DK-6470 Sydals (DK)
(74) Representative: Raffnsöe, Knud Rosenstand

(56) References cited:
- EP-A- 0 068 560
- EP-A- 0 184 155
- EP-A- 0 211 785
- DE-A- 1 582 356
- FR-A- 1 499 066
- FR-A- 2 282 781
- FR-A- 2 357 163
- FR-A- 2 644 029
- GB-A- 1 594 609
- US-A- 3 965 658
- leaflet: "JF" mower GMS 2400 S

## Description

The present invention relates to a device comprising a lift-suspended agricultural implement, especially a disc mower or a cylinder mower of the kind, which, when operating, is pulled behind the tractor and is sideways displaced in relation thereto, so that the active operating width of the disc mower is outside the track of the tractor, the device further comprising a carrier arm extending over the agricultural implement, one end of said carrier arm being pivotally connected in a pivot point to a frame with a three-point connection means connectable with the three-point suspension of the tractor, said pivot point being displaced sideways in relation to the centre plane of the tractor to such an extent that the agricultural implement, which is in a central point pivotally connected with the other end of the carrier arm, for transport can be lifted together with the carrier arm by the three-point suspension of the tractor to a considerable road clearance and swung rearwards into a transport position behind the tractor, in which position its transport width is essentially centered in relation to the track of the tractor, a transmission device mounted on said frame being connected on one hand with a drive for the working tools of the agricultural implement by means of a first, telescopically extendable cardan shaft and being connectable on the other hand with the power take-off shaft of the tractor by means of a second cardan shaft.

A device of this art has been manufactured and marketed by the present applicant under the trade mark GMS 2400 S. When such a known device is to be brought into its transportposition, it is imperative that the said first cardan shaft is taken off from either the transmission device or the drive, as the relative change of the distance between the cardan joint of the telescopic cardan shaft exceeds the relative change possible in practice of the length of the telescopic cardan shaft.

Another device of this kind is known, in which the transmission device is suspended in such a way that it may swing away form the turning point in order to provide room for the telescopic cardan shaft, when the agricultural implement is in its transport position. This is why it can take place without the telescopic cardan shaft being taken off. This suspension has, however, a relatively complicated construction on account of the pivotable suspension of the transmission device.

The object of the invention is to provide a device of the said kind, which is adapted in such a way that it allows the agricultural implement to be swung from its working position to a transport position without the first cardan shaft being taken off, and which has a simple construction.

This object is met by means of the device mentioned by way of introduction, said device being characteristic in that the pivotal connection between the telescopic cardan shaft and the transmission device mounted on said frame in a fixed position in relation thereto is positioned between the centre or symmetry plane of the three-point connection means and the pivotal connection of the carrier arm with the frame in such a sideways distance and in such a rearwards position in relation to the latter pivotal connection, that the telescopic cardan shaft in the transport position is positioned in a vertical plane parallel with the centre plane of the tractor, and in means ensuring that the end of the agricultural implement closest to the tractor in the transport position is raised under the carrier arm with such a road clearance that the telescopic cardan shaft in the transport position has a length corresponding essentially to its minimum length.

The invention will be described in detail in the following by means of an embodiment with reference to the accompanying schematic drawing, in which:
Fig. 1 shows a disc mower in its operating position suspended in a tractor suspension according to the invention and seen from above,

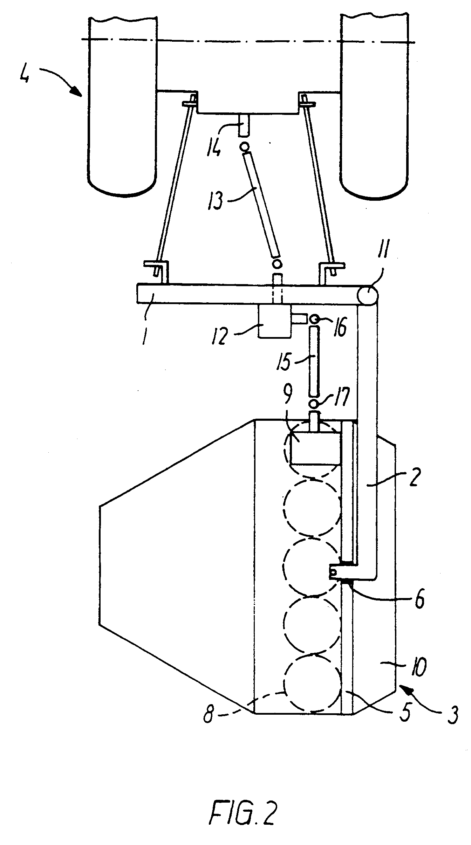

Fig. 2 a picture corresponding to Fig. 1, but with the disc mower in its transport position, and
Fig. 3 a picture corresponding to Fig. 2, but seen from the side.

In the figures a mower 3 known per se is shown. This mower is suspended in the three-point suspension of a tractor 4 by means of a suspension frame 1 and a carrier arm 2.

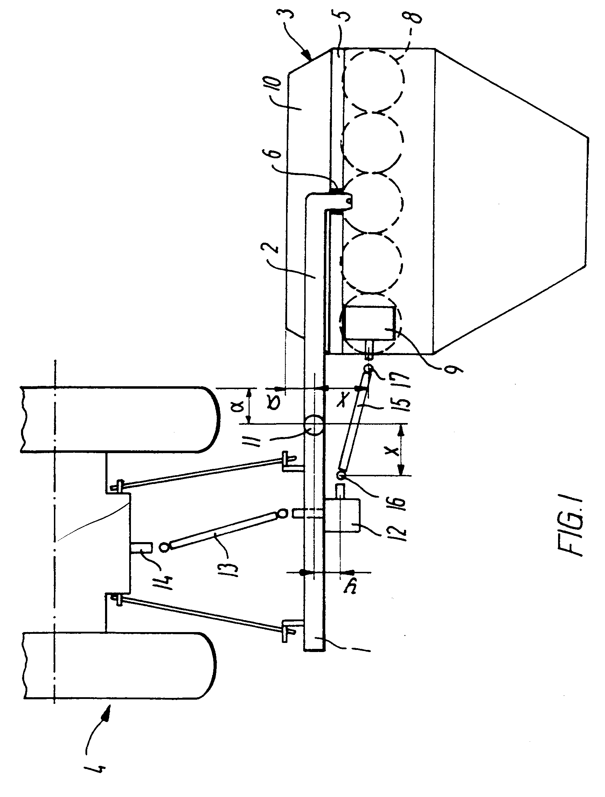

The mower 3 comprises a frame 5, to the centre of which the carrier arm 2 is fastened by means of a pivot joint 6 with an essentially horizontal axis extending longitudinally in relation to the mower. Under the frame 5 and immediately behind a vertical plane through the pivot joint 6 and transversely to its axis a knife bar 7 is mounted, said bar being provided with several, for example five, horizontally rotating knife discs 8. A first angle gear 9 is placed essentially vertically above the knife disc outermost to the left of fig. 1.

The mower 3 is provided with a pendent skirt 10 constituting the front part of the mower.

The carrier arm 2 is connected with the suspension frame 1 by means of a pivot joint 11 with an essentially vertical axis. On the suspension frame 1 a second angle gear 12 is mounted. This angle gear is by means of a first cardan shaft 13 connected with the power take-off 14 of the tractor, and it is by means of a telescopic, second cardan shaft 15 connected with the first angle gear 9. The second cardan shaft 15 is provided with a first and a second cardan joint, 16 and 17, respectively.

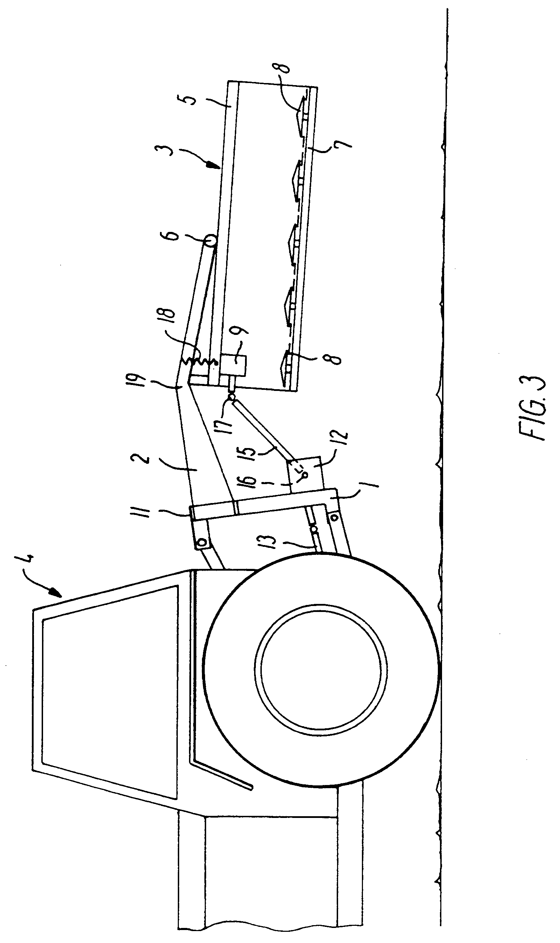

The geometry of the mower 3 with accompanying suspension frame 1 and carrier arm 2 as described is determined by a number of requirements and prerequisites. The total length of the mower 3 corrresponds essentially to the track gauge of the tractor. It is therefore essential that the mower is centered in relation to the track of the tractor, when the mower is brought into its transport position. As shown in Fig. 1, the distance of the pivot joint 11 from the outer border of the tractor track in the direction towards the mower in its operating position corresponds to the horizontal distance of the carrier arm 2 to the front delimitation of the skirt 10. If this horizontal distance was made smaller, the carrier arm 2 would be removed from the centre of gravity of the mower, which would entail an increased torsional moment on the carrier arm 2, which would not be desirable. If the horizontal distance of the carrier arm 2 to the front delimitation of the skirt 10 was increased, this would entail an increase also of the distance from the pivot joint 11 to the outer border of the tractor track, which would mean that the carrier arm 2 had to be made longer in order not to change the position of the mower 3 in relation to the tractor track in the operating position. Such an extension of the carrier arm 2 would, as will be seen from Fig. 3, have the effect that the centre of gravity of the mower in its transport position would be positioned further away from the tractor, which is undesirable.

The angle gear 9 is for constructional purposes placed essentially vertically above the one of the knife discs 8, which is closest to the tractor. In that way the horizontal distance x from the carrier arm 2 to the input shaft of the angle gear 9, and consequently the cardan joint 17, is determined.

To keep the angle of the cardan joints 16 and 17 at a minimum during the operation of the mower the two angle gears 9 and 12 are placed in such a way that, when the mower is in its working position, they are essentially at the same level.

To ensure that the distance between the cardan joints 16 and 17 is not changed more than can be compensated for by the telescopic shaft 15, when the mower 3 is brought from operating position into transport position or the other way round, the angle gear 12 is displaced in relation to the centre plane of the tractor against the pivot joint 11. This displacement makes the distance between the cardan joints 16 and 17 smaller in both the operating position and the transport position. The angle gear 12 is in the embodiment shown displaced to a position in the distance x, as defined above, from the vertical plane passing through the pivot joint 11, parallel with the centre plane of the tractor. The position chosen has the effect that the cardan joint 16 in the transport position is angled 90°, which is maximum for this joint. The chosen position is thus a practical outer limit. It is advantageous to place the angle gear 12 at this outer limit, as a displacement of the angle gear from there towards the centre plane of the tractor, as is seen from the drowing, in all essential would entail a corresponding increase of the distance between the cardan joints 16 and 17 in the operating position, but no change of this distance in the transport position.

The angle gear 12 is furthermore placed in such a way that the cardan joint 16 is positioned at distance y behind the plane of the suspension frame 1, in which plane the axis of the pivot joint 19 lies, the distance y being preferably the smallest possible, as an increase of y would decrease the distance between the cardan joints 16 and 17 in the transport position, as will be seen from Fig. 3, while this distance in the operation position will not decrease essentially through the increase of y, which can be seen from Fig. 1.

The carrier arm 2 has near its centre a downwards bent portion 19 so that this part of the carrier arm 2 is lifted in relation to its ends. Thereby, the mower 3 is allowed to tilt upwards with its side facing the tractor 4, when the mower is swung into its transport position. This causes the telescopic shaft 15 to take up an oblique position and the distance between the cardan joints 16 and 17 is increased.

The combined effect of the displaced position of the angle gear 12 and the oblique position of the telescopic shaft has the effect that the distance between the cardan joints becomes wide enough to provide room for the retracted, telesocpic shaft 15.

If the side of the mower 3 facing the tractor instead of tilting upwards tilts downwards, this will also provide sufficient space for the retracted telescopic shaft 15. In that case, however, the road clearance below the part of the mower 3, which is in front during transport, will be lost.

Therefore, a means has been provided, in the shape of the spring 18 shown in Fig. 3 between the carrier arm 2 and the mower, to ensure that the mower tilts upwards.

## Claims

1. A device comprising a lift-suspended agricultural implement, especially a disc mower (3) or a cylinder mower of the kind, which, when operating, is pulled behind the tractor and is sideways displaced in relation thereto, so that the active operating width of the disc mower (3) is outside the track of the tractor (4), the device further comprising a carrier arm (2) extending over the agricultural implement, one end of said carrier arm being pivotally connected in a pivot point (11) to a frame (1) with a three-point connection means connectable with the three-point suspension of the tractor, said pivot point being displaced sideways in relation to the centre plane of the tractor to such an extent that the agricultural implement (3), which is in a central point (6) pivotally connected with the other end of the carrier arm (2), for transport can be lifted together with the carrier arm (2) by the three-point suspension of the tractor to a considerable road clearance and swung rearwards into a transport position behind the tractor (4), in which position its transport width is essentially centered in relation to the track of the tractor, a transmission device (12) mounted on said frame (1) being connected on one hand with a drive (9) for the working tools (8) of the agricultural implement (3) by means of a first, telescopically extendable cardan shaft (15) and being connectable on the other hand with the power take-off shaft (14) of the tractor by means of a second cardan shaft (13),
**characterized** in that the pivotal connection (16) between the telescopic cardan shaft (15) and the transmission device (12) mounted on said frame (1) in a fixed position in relation thereto is positioned between the centre or symmetry plane of the three-point connection means and the pivotal connection (11) of the carrier arm (2) with the frame (1) in such a sideways distance and in such a rearwards position in relation to the latter pivotal connection (11), that the telescopic cardan shaft (15) in the transport position is positioned in a vertical plane parallel with the centre plane of the tractor, and in means (18) ensuring that the end of the agricultural implement closest to the tractor in the transport position is raised under the carrier arm with such a road clearance that the telescopic cardan shaft (15) in the transport position has a length corresponding essentially to its minimum length.

2. A device according to claim 1, in which the first cardan shaft (15) connects said pivotal connection which is a first cardan joint (16) on the transmission device (12) with a second cardan joint (17) on the drive (9), said second cardan joint (17) having a horizontal distance X to the carrier arm (2), and in which the transmission device (12) is placed vertically in such a way, that the first and the second cardan joints (16,17), when the agricultural tool is in its operating position, are positioned essentially at the same level, **characterized** in that the first cardan joint (16) is positioned at a distance from a vertical plane passing through the pivot point (11) and being parallel with the centre plane of the tractor, which distance is not smaller than the distance X, and that the first cardan joint (16) is positioned close to a plane passing through the axis of the pivot point (11) and being perpendicular to the centre plane of the tractor.

3. A device according to claim 1 or 2,
**characterized** in that said means for ensuring that the end of the agricultural implement closest to the tractor is raised in the transport position comprise a tension spring (18) between said end of the agricultural implement (3) and the carrier arm (2).

4. A device according to claims 1-3,
**characterized** in that the carrier arm (2) has a downwards bend (19).

## Patentansprüche

1. Gerät umfassend ein lift-aufgehängtes, landwirtschaftliches Werkzeug, insbesondere einen Scheibenmäher (3) oder einen Zylindermäher von dem Typ, der in seiner Arbeitsstellung hinter dem Schlepper (4) gezogen wird und der seitlich im Verhältnis dazu verschoben ist, so dass die wirksame Arbeitsbreite des Mähers (3) sich ausserhalb der Spur des Schleppers (4) befindet, welches Gerät weiter einen sich über das landwirtschaftliche Gerät streckenden Tragarm (2) umfasst, wobei ein Ende des Tragarms mit einem ein Dreipunktsverbindungsmittel umfassenden Gestell (1), das mit der Dreipunktsaufhängung des Schleppers verbunden werden kann, verbunden ist, welcher Drehpunkt seitlich so weit im Verhältnis zur Mittelebene des Schleppers verschoben ist, dass das landwirtschaftliche Werkzeug (3), das in einem zentralen Punkt (6) mit dem anderen Ende des Tragarms (2) drehbar verbunden ist, im Hinblick auf Transport von der Dreipunktsaufhängung des Schleppers mit dem Tragarm (2) zu einem erheblichen Bodenabstand aufgehoben und hinter den Schlepper (4) in einer Transportstellung eingeschwenkt werden kann, in welcher seine Transportbreite im wesentlichen im Verhältnis zur Spur des Schleppers zentriert ist, wobei eine auf dem Gestell montierte Übertragungsvorrichtung (12) teils mit einer Antriebsvorrichtung (9) für Arbeitswerkzeuge (8) auf dem landwirtschaftlichen Werkzeug (3) über eine erste, teleskopisch verschiebbare Gelenkwelle (15) verbunden ist, teils mit der Leistungsabnahme (14) des Schleppers über eine andere Gelenkwelle verbindbar ist, dadurch **gekennzeichnet**, dass die Drehverbindung (16) zwischen der teleskopischen Gelenkwelle (15) und der zum erwähnten Gestell (1) in festem Abstand im Verhältnis zu diesem angeordneten Übertragungsvorrichtung (12) sich zwischen der Mittel- oder Symmetrieebene der Dreipunktsaufhängung und der Drehverbindung (11) des Tragarms (2) mit dem Gestell (1) in einem solchen seitlichen Abstand und einer solchen rückwärtigen Stellung im Verhältnis zur letztgenannten Drehverbindung befindet, dass sich die teleskopische Gelenkwelle (15) in Transportstellung in einer senkrechten Ebene befindet, die hauptsächlich mit der Mittelebene des Schleppers parallel ist, und dass Mittel (18) zur Sicherung, dass sich das am nächsten zum Schlepper befindliche Ende des landwirtschaftlichen Werkzeuges in Transportstellung unter dem Tragarm mit einem solchen Bodenabstand aufgehoben ist, dass die teleskopische Gelenkwelle (15) in Transportstellung eine Länge aufweist, die im wesentlichen ihrer Minimumlänge entspricht, vorgesehen sind.

2. Gerät nach Anspruch 1, wo die erste Gelenkwelle (15) die erwähnte Drehverbindung in Form eines ersten Kardangelenkes (16) auf der Übertragungswelle (12) mit einem zweiten Kardangelenk (17) auf der Antriebsvorrichtung (9) verbindet, welches zweites Kardangelenk (17) einen waagerechten Abstand X zum Tragarm (22) aufweist und in senkrechter Richtung so angeordnet ist, dass das erste und das zweite Kardangelenk (16, 17), wenn das landwirtschaftliche Werkzeug in der Arbeitsstellung ist, sich in im wesentlichen dieselber Ebene befinden,
dadurch **gekennzeichnet**, dass sich das erste Kardangelenk (16) in einem Abstand von einer senkrechten Ebene zwischen dem Drehpunkt (11) und parallel zur Mittelebene des Schleppers befindet, welcher Abstand nicht kleiner als der Abstand X ist, und dass sich das erste Kardangelenk (16) nah an einer Ebene durch die Achse des Drehpunkts (11) und senkrecht zur Mittelebene des Schleppers befindet.

3. Gerät nach Anspruch 1 oder 2,
dadurch **gekennzeichnet**, dass die erwähnten Mittel zur Sicherung, dass sich das am nächsten zum Schlepper befindliche Ende des landwirtschaftlichen Werkzeuges in Transportstellung gehoben ist, eine Zugfeder (18) zwischen dem erwähnten Ende des landwirtschaftlichen Werkzeuges (3) und dem Tragarm (2) umfassen.

4. Gerät nach Anspruch 1-3,
dadurch **gekennzeichnet**, dass der Tragarm (2) eine abwärtsgehende Knickung (19) aufweist.

## Revendications

1. Dispositif d'attelage sur tracteur pour un outil agricole, en particulier faucheuse à disques (3) ou faucheuse à cylindres, du type qui en fonctionnement est tiré par le tracteur (4) et se trouve décalé latéralement par rapport à celui-ci si bien que la largeur effective de travail de la faucheuse à disques (3) se situe en dehors de la voie du tracteur (4), ledit dispositif comportant, de plus, un bras porteur (2) que s'étend au dessus de l'outil agricole et dont une extrémité, en un point de pivotement (11), est articulée sur un cadre (1) relié à la suspension trois points du tracteur, ledit point de pivotement étant suffisamment décalé latéralement par rapport au plan médian du tracteur pour que l'outil agricole (3), qui en un point central (6) est relié à pivotement avec l'autre extrémité du bras-porteur (2), puisse, pour transport, être relevé, avec le bras porteur, jusqu'à une garde au sol importante et être basculé vers l'arrière jusqu'à une position de transport derrière le tracteur (4), position dans laquelle sa largeur de transport se trouve essentiellement centrée par rapport à la voie du tracteur, un disposif de transmission (12) monté sur ledit cadre (1) étant relié d'une part à un organe de commande (9) des outils de travail (8) de l'outil agricole (3) par l'intermédiaire d'un premier arbre téléscopique à cardan (15), d'autre part avec la prise de force (14) du tracteur par l'intermédiaire d'un second arbre à cardan (13), caractérisé en ce que la liaison à pivotement (16) entre l'arbre téléscopique à cardan (15) et le dispositif de transmission (12) monté à poste fixe sur ledit cadre (1) est située entre le plan médian ou de symétrie des moyens de suspension trois points et la liaison à pivotement (11) du bras porteur (2) avec le cadre (1), avec un décalage latéral et un décalage vers l'arrière, par rapport à cette dernière liaison à pivotement (11), tels que l'arbre téléscopique à cardan (15) en position de transport se situe dans un plan vertical essentiellement parallèle au plan médian du tracteur, et en ce que des moyens (18) sont prévus pour assurer que l'extrémité de l'outil agricole la plus proche du tracteur en position de transport se trouve relevée sous le bras porteur, avec une garde au sol telle que l'arbre téléscopique à cardan (15) prend, en position de transport, une longueur correspondant essentiellement à sa longueur minimale.

2. Dispositif d'attelage sur tracteur selon la revendication 1, et dans lequel le premier arbre à cardan (15) relie la liaison à pivotement, constituée par un premier joint de cardan (16) sur le dispositif de transmission (12), avec un second joint de cardan (17) sur l'organe de commande (9), ledit second joint de cardan (17) se situant à une distance X du bras porteur (2) et le dispositif de transmission (12) étant situé en position telle dans le sens vertical que le premier joint de cardan (16) et le second joint de cardan (17) se trouvent essentiellement au même niveau lorsque l'outil agricole est en position de travail, caractérisé en ce que le premier joint de cardan (16) est situé à distance d'un plan vertical passant par le point de pivotement (11) et parallèle au plan médian du tracteur, distance qui n'est pas inférieure à la distance X, et en ce que le premier joint de cardan (16) est situé près d'un plan passant par l'axe du point de pivotement (11) et perpendiculaire au plan médian du tracteur.

3. Dispositif d'attelage sur tracteur selon les revendications 1 ou 2, caractérisé en ce que lesdits moyens pour assurer que l'extrémité de l'outil agricole la plus proche du tracteur se trouve relevée en position de transport comprennent un ressort de traction (18) entre ladite extrémité de l'outil agricole (3) et le bras porteur (2).

4. Dispositif d'attelage sur tracteur selon les revendications 1 à 3, caractérisé en ce que le bras porteur (2) est coudé (19) vers le bas.
